# EUROPÄISCHE PATENTSCHRIFT

(11) **EP 1 851 101 B1**
(45) Veröffentlichungstag und Bekanntmachung des Hinweises auf die Patenterteilung: **30.06.2010**
(21) Anmeldenummer: 06707009.4
(22) Anmeldetag: 16.02.2006
(51) Int. Cl.: B62B 5/06, B62B 3/06, B66F 9/20, B62D 51/00

(54) **DEICHSELKOPF**
SHAFT HEAD
TETE DE TIMON

(30) Priorität: 25.02.2005 DE 202005003076 U
(43) Veröffentlichungstag der Anmeldung: 07.11.2007
(73) Patentinhaber: REMA Lipprandt GmbH & Co. KG, D-53175 Bonn (DE)
(72) Erfinder: STANDKE, Kurt, 53177 Bonn (DE)
(74) Vertreter: Kluin, Jörg-Eden
(86) Internationale Anmeldenummer: PCT/EP2006/001408
(87) Internationale Veröffentlichungsnummer: WO 2006/089680

(56) Entgegenhaltungen:
- EP-A- 1 180 473
- DE-A1- 4 215 547
- DE-A1- 10 348 642
- DE-U1- 20 004 887
- GB-A- 2 413 375
- US-A- 5 789 884
- US-B1- 6 227 320
- US-B1- 6 276 485

## Beschreibung

Die Erfindung betrifft einen Deichselkopf mit einer Anordnung zur Betätigung der Hebeeinrichtung eines Flurförderzeugs gemäß dem Oberbegriff des Anspuchs 1. Ein derartiger Deichselkopf ist aus EP 1180473 bekannt.

Hubwagen oder Hublader mit Gehbetrieb weisen eine Deichsel auf, mit der das Flurförderzeug gelenkt wird. Die Anlenkung der Deichsel erfolgt an der Halterung für das verschwenkbare Antriebsrad des Flurförderzeugs. Am freien Ende der Deichsel ist ein Deichselkopf vorgesehen, der Betätigungsorgane zum Betrieb des Flurförderzeugs aufweist. Die letzteren umfassen u. a. einen Fahrschalter sowie eine Schalteranordnung zur Betätigung der Hebeeinrichtung des Flurförderzeugs.

Eine Deichsel mit einem Deichselkopf der oben beschriebenen Art ist aus der DE 195 23 921 A1 bekannt. Dieser Deichselkopf umfasst ein in Verlängerung des Deichselstiels angeordnetes Horn sowie sich beidseits des Horns sich annähernd quer zum Horn erstreckende stangenartige Griffe, die über an den äußeren Enden der Griffe angebundene und sich annähernd parallel zum Horn erstreckende Schenkelabschnitte und über mit den Schenkelabschnitten verbundene Trägerabschnitte mit dem Horn bzw. dem Stiel verbunden sind. Die Schenkel- und Trägerabschnitte bilden einen Schutzbügel mit Grifföffnungen. Zwischen Griff und Horn ist ein Fahrschaltergriff vorgesehen, der annähernd um die Achse des Griffs schwenkbar am Horn gelagert ist. An jeder Seite des Horns sind mehrere Schalttasten zur Betätigung der Hebeeinrichtung des Flurförderzeugs angeordnet, die mit den Fingern eines Benutzers druckbetätigbar sind. Die Schalttasten sind mit in dem Deichselkopf angeordneten Mikroschaltern mechanisch verbunden. Nachteilig ist bei diesem Deichselkopf, dass die Verwendung der Schalttasten Durchbrüche in dem Deichselkopfgehäuse erforderlich macht, die gegen ein Eindringen von Feuchtigkeit und Verunreinigungen in das Innere des Deichselkopfes abgedichtet werden müssen. Die hierzu erforderliche Gummidichtung ist teuer in ihrer Herstellung und zudem anfällig, da sich nach häufiger Betätigung in den Kollabierbereichen Risse und damit Undichtigkeiten ausbilden können. Insbesondere dann, wenn ein solche Undichtigkeiten aufweisendes Flurförderzeug Regen ausgesetzt ist oder mit einem Dampfstrahl-Gerät gereinigt wird, kann Feuchtigkeit in das Innere des Deichselkopfes eindringen und in dem Deichselkopf befindliche, elektrische Bauteile zerstören.

Aus der DE 42 15 547 A1 ist ein relativ komplexer Kombidrehgriff für Flurförderfahrzeuge mit einem Dauermagneten und einem Hall - Generator bekannt.

Der Erfindung liegt daher die Aufgabe zu Grunde, einen Deichselkopf zu schaffen, der unempfindlicher gegen Nässe und Schmutz und dennoch preisgünstig herstellbar ist.

Diese Aufgabe ist durch den in Anspruch 1 wiedergegebenen Deichselkopf gelöst.

Dadurch, dass bei dem erfindungsgemäßen Deichselkopf die Schalteranordnung zur Betätigung der Hebeeinrichtung ein an dem Deichselkopf angebrachtes Betätigungsorgan umfasst, welches ein Stellglied, mit dem berührungslos die elektrischen Eigenschaft wie Induktivität, Kapazität oder elektrische Spannung eines Sensors veränderbar ist, aufweist, und ein entsprechender Sensor vorgesehen ist, der sich in Wirkverbindung mit dem Stellglied befindet, erfolgt die Erzeugung des Betätigungssignals für die Hebeeinrichtung berührungslos. Es können somit der Sensor in einem geschlossenen Gehäuse des Deichselkopfes und das Betätigungsorgan außerhalb dieses Gehäuses angeordnet sein. Eine vollständig geschlossene Bauweise des Gehäuses des Deichselkopfes ist daher möglich.

Der Sensor ist als Magnetfeldsensor, besonders bevorzugt als Hall-Sensor ausgebildet. Dementsprechend umfasst das Stellglied mindestens eine Magnetfeldquelle. Hall-Sensoren, die eine Hall-Spannung erzeugen, deren Größe abhängig von der Stärke des sie durchsetzenden Magnetfeldes ist, sind in vielfachen Ausführungsformen bekannt und handelsüblich. Wird durch den Benutzer des Flurförderzeugs das Betätigungsorgan betätigt, so ändert sich die Stärke des Magnetfeldes am Orte des Hall-Sensors und damit die Hall-Spannung, die als Kenngröße für den jeweils vom Benutzer gewünschten Betriebszustand der Hebeeinrichtung verwendet werden kann.

Das Betätigungsorgan umfasst eine an dem Deichselkopf um eine Achse schwenkbar gelagerte Betätigungswippe, die sich vorzugsweise über ein Federelement an dem Deichselkopf abstützt. So kann der Befehl "heben" beispielsweise dadurch ausgelöst werden, in dem die Betätigungswippe auf der einen Seite aus der durch das Federelement vorgegebenen Ruhestellung der Betätigungswippe unter Überwindung der Federkraft nach unten gedrückt wird. Hierzu kann dem Hall-Sensor ein Mikroprozessor nachgeschaltet sein, der die in Abhängigkeit der Stellung der Betätigungswippe erzeugte Hall-Spannung in Steuersignale für die Betätigung der Hebeeinrichtung umsetzt. Die Ausgangsspannung, die von dem Hall-Sensor bei nicht betätigter Betätigungswippe erzeugt wird, würde demnach als Steuersignal gewertet werden, das dem Betriebszustand "Nichtbetätigung der Hebeeinrichtung" entspricht. Folgerichtig würde eine Betätigung der Betätigungswippe auf der anderen Seite nach oben zu einer Änderung der Ausgangsspannung führen, die von dem Mikroprozessor in ein Signal "Herablassen der Hebeeinrichtung" umgesetzt würde.

Besonders bevorzugt ist eine Weiterbildung des Deichselkopfes, bei der Federelemente beidseitig der Achse angeordnet sind. Sind diese Federelemente - wie besonders bevorzugt - so ausgelegt, dass sie sich beide im kraftlosen Zustand befinden, wenn die Betätigungswippe sich in ihrer Ruhestellung befindet, so führt auch der Ausfall eines der Federelemente beispielsweise durch Bruch nicht zu einem unkontrollierten Betriebszustand der Hebeeinrichtung.

Die Achse, um die die Betätigungswippe schwenkbar gelagert ist, ist vorzugsweise in Längsrichtung des Deichselkopfes ausgerichtet. Unter Längsrichtung ist hierbei eine Richtung zu verstehen, die quer zum Horn verläuft. Die Betätigungswippe wird dann in demselben Sinne betätigt wie die bekannten Schalttasten, so dass kein Umdenken seitens des Personals, das sich an herkömmliche Deichselköpfe gewöhnt hat, erforderlich ist.

Die Charakteristik des Mikroprozessors ist vorzugsweise derart gewählt, dass die Empfindlichkeit mit wachsender Auslenkung des Betätigungsorgans aus seiner Ruhelage progressiv zunimmt. Durch diese Maßnahme wird bewirkt, dass eine besonders feinfühlige Betätigung der Hebeeinrichtung bei kleinen Hebe- oder Senkgeschwindigkeiten möglich ist. Das höhenexakte Positionieren einer mit dem Flurförderzeug gehobenen Last beispielsweise zum Absetzen Letzterer in einem Hochregal wird durch diese Maßnahme wesentlich erleichtert.

Die Betätigungswippe weist eine sich quer zur durch die Achse definierte Betätigungsrichtung erstreckende Aussparung auf, in welche der Magnetsensor hineinragt.

Beidseitig vom Magnetsensor sind Magnetfeldquellen angeordnet.

Beidseitig vom Magnetsensor können dann Permanentmagnete als Magnetfeldquelle dienen, die etwa in umgekehrter Richtung, d. h. mit gleichnamigen Polen etwa einander zugewandt, angeordnet sind. Durch diese Maßnahme kann der Hall-Sensor etwa mittig zwischen den beiden Permanentmagneten und mit seiner Flächenausdehnung etwa senkrecht zur Verbindungslinie zwischen den Permanentmagneten angeordnet sein. Durch diese Maßnahme werden einerseits eine besonders hohe Magnetfelddichte am Ort des Hall-Sensors und hohe Änderungen der Hall-Spannung bei Betätigung der Betätigungswippe erzielt. Andererseits kann bei dem Hall-Sensor die sogenannte SMD-Technologie zum Einsatz kommen, bei der der eigentliche Sensorbaustein direkt auf die Platine unter gleichzeitiger Herstellung der notwendigen elektrischen Kontaktierungen aufgesetzt und befestigt wird. Durch diese Maßnahme wird eine größere Positioniergenauigkeit des Hall-Sensors und eine höhere Widerstandsfähigkeit gegen mechanische Belastungen, beispielsweise durch Vibrationen gegenüber solchen Anordnungen erzielt, bei denen der Hall-Sensor über seine elektrischen Kontaktbeine an der Platine befestigt ist. Außerdem ist die Anordnung aufgrund des Feldlinienverlaufs besonders gut gegen äußere Störeinflüsse geschützt. Wird ein Hall-Sensor verwendet, der in der unbelasteten Mittelstellung der Betätigungswippe eine Spannung von etwa 2,5 Volt, bei Betätigung der Wippe auf der dem Benutzer zugewandten Seite nach unten eine Spannung bis zu 5 Volt und bei einer Betätigung der Betätigungswippe aus der unbelasteten Ruhestellung auf der Seite der Betätigungsperson nach oben die Hall-Spannung auf Werte nahe 1 Volt reduziert, so kann eine direkte Anbindung des Hall-Sensors an den Mikroprozessor ohne zwischengeschaltete, störempfindliche Verstärkungsstufen erfolgen.

Ist der Mikroprozessor - wie besonders bevorzugt - mit einem A/D-Wandler verbunden, der das Betätigungssignal als serielles Übertragungsprotokoll ausgibt, so kann die Übertragung der im Deichselkopf erzeugten Signale zu den in dem Flurförderzeug befindlichen Leistungseinheiten wie Fahrantrieb, Antrieb der Hebevorrichtung etc. über wenige, beispielsweise drei Kabel erfolgen.

Besonders betriebssicher ist eine Ausführungsform eines erfindungsgemäßen Deichselkopfes, bei der beidseitig der Achse der Betätigungswippe Einheiten bestehend aus Stellglied und Sensor vorgesehen sind. Es ist dann möglich, den Mikroprozessor derart auszugestalten und zu programmieren, dass stets eine Plausibilitätsüberprüfung der von den Sensoren erfassten Signale stattfindet und die Hebeeinrichtung stillgesetzt wird, sobald auf einen Defekt hindeutende unplausible Signale erfasst werden. Die Betriebssicherheit des mit einem erfindungsgemäßen Deichselkopf ausgerüsteten Flurförderzeugs wird durch diese Weiterbildung erhöht.

In der Zeichnung ist - schematisch - ein Ausführungsbeispiel eines erfindungsgemäßen Deichselkopfes dargestellt. Es zeigen:
- Fig. 1: ein Ausführungsbeispiel eines erfindungsgemäßen Deichselkopfes in einer Ansicht von oben;
- Fig. 2: - schematisch - eine teilgeschnittene Seitenansicht einer bevorzug- ten Ausführungsform einer Schalteranordnung zur Betätigung einer Hebeeinrichtung sowie
- Fig. 3: - qualitativ - den Verlauf der magnetischen Feldlinien bei einer Schal- teranordnung gemäß Fig. 2.

Der Deichselkopf 11 weist ein die Verlängerung des in der Zeichnung nicht dargestellten Deichselstiels bildendes Horn 12 auf, von dem aus seitlich abgehend sich Tragabschnitte 13, 14 erstrecken. An den Enden der Tragabschnitte sind gekrümmte Bereiche 15, 16 angebracht, die in etwa senkrecht zum Horn 12 führende Griffe 17, 18 übergehen. In Verlängerung der beiden Griffe 17, 18 sind an dem Horn 12 die beiden miteinander gekoppelten Teile 19, 20 eines an sich bekannten Fahrschalters 21 vorgesehen, der beispielsweise mit dem Daumen einer Bedienperson betätigt werden kann.

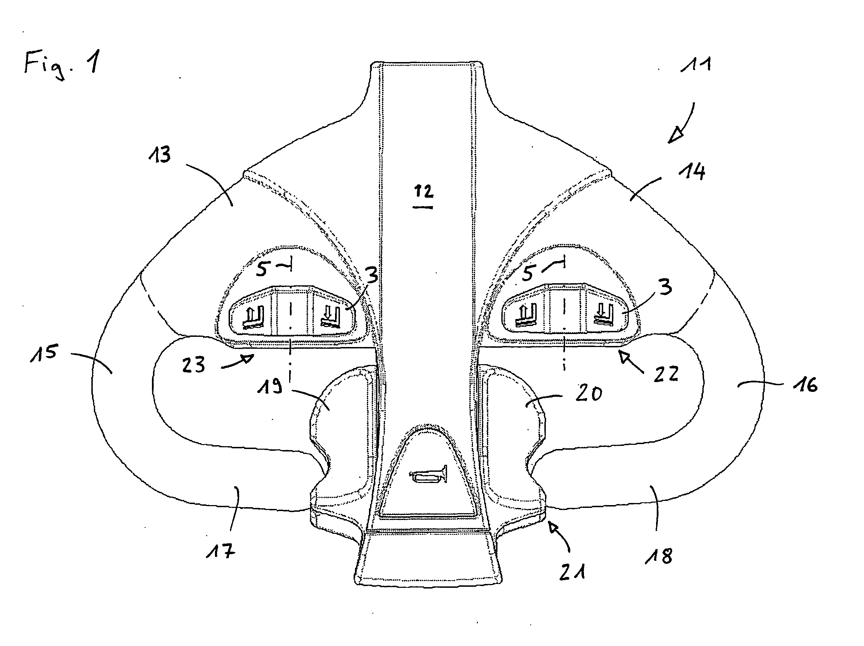

Ferner sind beidseitig vom Horn 12 des Deichselkopfes 11 in den der Bedienperson zugewandten Bereichen der Tragabschnitte Schaltanordnungen 22, 23 vorgesehen, die der Betätigung der Hebeeinrichtung eines Flurförderzeugs dienen. Die beiden Schaltanordnungen 22, 23 umfassen jeweils eine Betätigungswippe 3, die durch Druck auf einen Endbereich um eine Achse 5 verschwenkt werden kann. Druck auf die in Fig. 1 links dargestellten Endbereiche bedeutet anheben der Hebevorrichtung, Druck auf die rechts dargestellten Endbereiche entsprechend absenken.

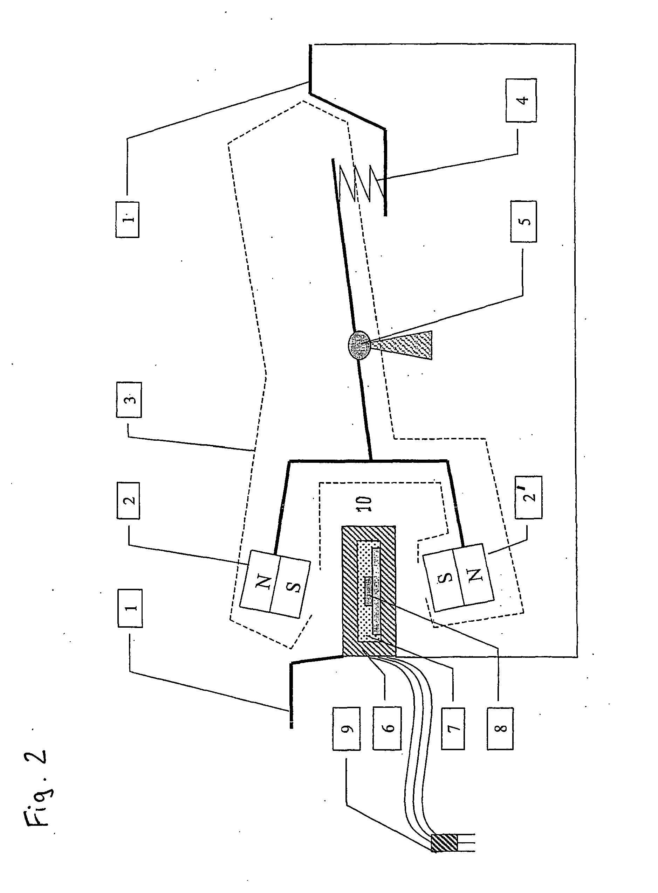

Eine der beiden identisch ausgeführten Schalteranordnungen ist in Fig. 2 schematisch dargestellt. An dem geschlossenen Gehäuse 1 des Deichselkopfes 11 ist um die Achse 5 verschwenkbare Betätigungswippe 3 vorgesehen. Sie stützt sich an ihrem in der Zeichnung rechts dargestellten Endbereich über ein Federelement 4 an dem Gehäuse 1 ab.

Der in der Zeichnung links dargestellte Endbereich der Betätigungswippe 3 ist derart gegabelt, dass zwischen den "Gabelzinken" eine sich quer zur durch die Achse definierte Betätigungsrichtung erstreckende Aussparung entsteht, in die ein als Hall-Sensor 8 ausgestalteter Magnetsensor 7 hineinragt. Der Magnetsensor 7 ist vollständig umgeben von dem Gehäuse 1, das hierzu eine in die Aussparung 10 hineinragende Auswölbung 6 aufweist. In den Endbereichen der beiden "Gabelzinken" ist jeweils ein Permanentmagnet 2, 2' angeordnet, derart, dass der Oberseite des Magnetsensors 7 der Südpol des oberen Permanentmagneten und der Unterseite des Magnetsensors 7 ebenfalls der Südpol des unteren Permanentmagneten 2' zugewandt ist.

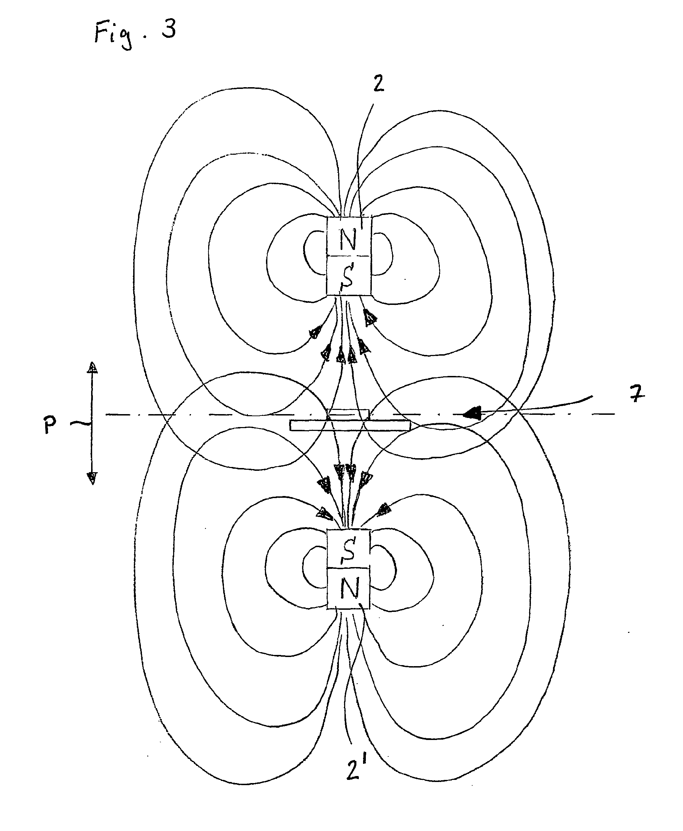

Wie Fig. 3 entnehmbar ist, die qualitativ den Verlauf der magnetischen Feldlinien bei in Ruhelage befindlicher Betätigungswippe zeigt, wird der Magnetsensor 7 in dieser Position etwa in gleicher Dichte von entgegengesetzt verlaufenden Feldlinien durchsetzt. Wird nun die Betätigungswippe aus ihrer Ruhelage ausgelenkt, was zu einer Verlagerung der Permanentmagnete in Richtung des Doppelpfeils P führt, überwiegt der Fluss der magnetischen Feldlinien einer Richtung am Orte des Sensors und das von ihm abgegebene Signal ändert sich.

Das von dem Magnetsensor in Abhängigkeit der Positionen der beiden Permanentmagnete 2, 2' erzeugte elektrische Signal - im Falle des dargestellten Ausführungsbeispiels die Hall-Spannung - wird einem Mikroprozessor 9 zugeleitet, der in Abhängigkeit dieses Eingangssignals ein Steuersignal für den Antrieb einer in der Zeichnung nicht dargestellten Hebeeinrichtung des Flurförderzeugs dient.

In der Zeichnung ist die Neutralstellung der Betätigungswippe 3 dargestellt, die sie bei entspanntem Federelement 4 einnimmt. Diese Neutralstellung erzeugt in dem Hall-Sensor 8 eine Hall-Spannung, die von der Magnetfeldstärke und somit vom Abstand der beiden Permanentmagneten 2, 2' von der jeweils zugewandten Seite des Hall-Sensors abhängt. Die Hall-Spannung in dieser Position kann beispielsweise 2,5 V betragen. Wird nun das in der Zeichnung links dargestellte, dem Benutzer zugewandte Ende der Betätigungswippe 3 nach unten bewegt, so erhöht sich die Hall-Spannung kontinuierlich beispielsweise bis auf 5 V, wenn sich das dem Benutzer zugewandte Ende der Betätigungswippe 3 in seiner unteren Extremstellung befindet. Der Mikroprozessor 9 ist so kalibriert, dass er an den Antrieb der Hebeeinrichtung im Falle der Hall-Spannung von 2,5 V ein den Stillstand des Antriebs bewirkendes Steuersignal abgibt. Im Falle einer Hall-Spannung von 5 V wird der Antrieb von dem Mikroprozessor 9 im Sinne der maximalen Hebegeschwindigkeit der Hebeeinrichtung angesteuert. Die Zwischenwerte der Hall-Spannung entsprechen auch Zwischenwerten in der Hebegeschwindigkeit, wobei der Mikroprozessor eine progressive Charakteristik aufweist, derart, dass die Änderung der Antriebsgeschwindigkeit überproportional zur Auslenkung der Betätigungswippe 3 aus ihrer Ruhelage steigt.

Wird die in der Zeichnung rechts dargestellte Seite der Betätigungswippe entgegen der durch das Federelement 4 eingeleiteten elastische Kraft nach unten bewegt, so sinkt die Hall-Spannung bei Erreichen der Endstellung der Betätigungswippe beispielsweise auf 2,5 V ab. Der Mikroprozessor 9 steuert den Antrieb entsprechend der obigen Darstellung, nur in umgekehrter Richtung an, so dass ein Absinken der Hebeeinrichtung bewirkt wird. Um Wiederholungen zu vermeiden, sei auf die Ausführungen bei der Betätigung der Betätigungswippe im Sinne eines Hebens der Hebeeinrichtung verwiesen.

Der Mikroprozessor 9 kann auf einer zentralen, in der Zeichnung nicht dargestellten Leiterplatte angeordnet sein. Die Leiterplatte kann ferner Mittel zur individuellen Kalibration der Schalteranordnung umfassen, die notwendig sind, um das von dem Mikroprozessor 9 abgegebene, der Ruhestellung des Antriebs der Hebeeinrichtung entsprechende Signal der durch Fertigungstoleranzen individuellen Ausgangsspannung des Hall-Sensors 8 bei in Ruhestellung befindlicher Betätigungswippe 3 anzupassen. Ferner können auf der zentralen Leiterplatte Mittel zur Anpassung des Empfindlichkeitsverlaufs über den Schaltweg der Schalteranordnung vorgesehen sein. Schließlich können A/D-Wandler vorgesehen sein, die das Ausgangssignal des Mikroprozessors 9 in serielle Übertragungsprotokolle umwandeln.

### Bezugszeichenliste:

- 1: Gehäuse
- 2, 2': Permanentmagnet
- 3: Betätigungswippe
- 4: Federelement
- 5: Achse
- 6: Auswölbung
- 7: Magnetsensor
- 8: Hall-Sensor
- 9: Mikroprozessor
- 10: Aussparung
- 11: Deichselkopf
- 12: Horn
- 13,14: Tragabschnitte
- 15,16: Bereiche
- 17,18: Griffe
- 19,20: Teile
- 21: Fahrschalter
- 22,23: Schaltanordnungen

## Patentansprüche

1. Deichselkopf (11) mit einer Schalteranordnung (22,23) zur Betätigung der Hebeeinrichtung eines Flurförderzeugs,
wobei
die Schalteranordnung (22,23) ein an dem Deichselkopf (11) angebrachtes Betätigungsorgan (3) umfasst, wobei
das Betätigungsorgan (3) ein Stellglied aufweist, wobei
die Schalteranordnung (22,23) einen Sensor (7) umfasst, der sich in berührungsloser Wirkverbindung mit dem Stellglied befindet und dessen elektrische Eigenschaft wie Induktivität, Kapazität oder elektrischen Spannung sich bei Betätigung des Betätigungsorgans (3) ändert, wobei der Sensor (7) ein Magnetfeldsensor (7) ist, das Stellglied mindestens eine Magnetfeldquelle umfasst und der Magnetfeldsensor (7) und die Magnetfeldquelle derart angeordnet sind, dass der Magnetfeldsensor (7) von den von der Magnetfeldquelle erzeugten magnetischen Feldlinien durchsetzt wird, wobei
beidseitig vom Magnetfeldsensor (7) Magnetfeldquellen angeordnet sind **gekennzeichnet dadurch, daß** das Betätigungsorgan (3) eine an dem Deichselkopf (11) um eine Achse (5) schwenkbar gelagerte Betätigungswippe (3) umfasst,
die eine sich quer zur durch die Achse (5) definierte Betätigungsrichtung erstreckende Aussparung (10) umfasst, in welche der Magnetfeldsensor (7) hineinragt.

2. Deichselkopf nach Anspruch 1,
**dadurch gekennzeichnet,**
**dass** der Magnetfeldsensor (7) als Hall-Sensor (8) ausgebildet ist.

3. Deichselkopf nach Anspruch 1 oder 2,
**dadurch gekennzeichnet,**
**dass** der Magnetfeldsensor (7) vollständig von dem Gehäuse (1) umgeben ist, das hierzu eine in die Aussparung (10) hineinragende Auswölbung (6) aufweist.

4. Deichselkopf nach einem der Ansprüche 1 bis 3
**dadurch gekennzeichnet,**
**dass** sich die Achse (5) in Längsrichtung des Deichselkopfes (11) erstreckt.

5. Deichselkopf nach einem der Ansprüche 1 bis 4,
**dadurch gekennzeichnet,**
**dass** mindestens ein Federelement (4) vorgesehen ist, über das sich die Betätigungswippe (3) an dem Deichselkopf (11) abstützt.

6. Deichselkopf nach Anspruch 5,
**dadurch gekennzeichnet,**
**dass** Federelemente (4) beidseitig der Achse (5) angeordnet sind.

7. Deichselkopf nach Anspruch 6,
**dadurch gekennzeichnet,**
**dass** die Federelemente (4) sich beide im kraftlosen Zustand befinden, wenn die Betätigungswippe (3) sich in ihrer Ruhestellung befindet.

8. Deichselkopf nach einem der Ansprüche 1 bis 7
**dadurch gekennzeichnet,**
**dass** beidseitig vom Magnetfeldsensor (7) Permanentmagnete (2, 2') angeordnet sind.

9. Deichselkopf nach Anspruch 8,
**dadurch gekennzeichnet,**
**dass** die Permanentmagnete (2, 2') derart angeordnet sind, dass gleichnamige Pole einander zugewandt sind.

10. Deichselkopf nach einem der Ansprüche 1 bis 9,
**dadurch gekennzeichnet,**
**dass** der Magnetfeldsensor (7) mit einem Mikroprozessor (9) verbunden ist, der die elektrische Eigenschaft des Magnetfeldsensors (7) in ein Betätigungssignal für die Hebeeinrichtung umsetzt.

11. Deichselkopf nach Anspruch 10,
**dadurch gekennzeichnet,**
**dass** der Mikroprozessor (9) mit einem A/D-Wandler verbunden ist, der das Betätigungssignal als serielles Übertragungsprotokoll proportional oder als on/off-Signal ausgibt.

12. Deichselkopf nach einem der Ansprüche 1 bis 11,
**dadurch gekennzeichnet,**
**dass** beidseitig der Achse (5) der Betätigungswippe (3) Einheiten bestehend aus Stellglied und Magnetfeldsensor (7) vorgesehen sind.

## Claims

1. Shaft head (11) comprising a switch arrangement (22, 23) for actuating the lifting device of an industrial truck,
the switch arrangement (22, 23) comprising an actuating element (3) fitted to the shaft head (11),
the actuating element (3) having an actuator,
the switch arrangement (22, 23) comprising a sensor (7) which is operatively connected to the actuator in a non-contacting manner and the electrical property of which, such as inductance, capacitance or electrical voltage, changes when the actuating element (3) is actuated,
the sensor (7) being a magnetic field sensor (7), the actuator comprising at least one magnetic field source, and the magnetic field sensor (7) and the magnetic field source being arranged in such a way that the magnetic field lines generated by the magnetic field source pass through the magnetic field sensor (7),
magnetic field sources being arranged on both sides of the magnetic field sensor (7),
**characterized in that** the actuating element (3) comprises an actuating rocker (3) that is mounted on the shaft head (11) such that it can be pivoted about an axis (5),
and that comprises a cut-out (10) which extends transversely with respect to the actuating direction defined by the axis (5) and into which the magnetic field sensor (7) projects.

2. Shaft head according to Claim 1,
**characterized in that** the magnetic field sensor (7) is constructed as a Hall sensor (8).

3. Shaft head according to Claim 1 or 2, **characterized in that** the magnetic field sensor (7) is completely surrounded by the housing (1) which, for this purpose, has a convexity (6) projecting into the cut-out (10).

4. Shaft head according to one of Claims 1 to 3,
**characterized in that** the axis (5) extends in the longitudinal direction of the shaft head (11).

5. Shaft head according to one of Claims 1 to 4, **characterized in that** at least one spring element (4) is provided, via which the actuating rocker (3) is supported on the shaft head (11).

6. Shaft head according to Claim 5,
**characterized in that** spring elements (4) are arranged on both sides of the axis (5).

7. Shaft head according to Claim 6,
**characterized in that** the spring elements (4) are both in the force-free state when the actuating rocker (3) is in its rest position.

8. Shaft head according to one of Claims 1 to 7,
**characterized in that** permanent magnets (2, 2') are arranged on both sides of the magnetic field sensor (7) .

9. Shaft head according to Claim 8,
**characterized in that** the permanent magnets (2, 2') are arranged in such a way that poles of the same name face each other.

10. Shaft head according to one of Claims 1 to 9,
**characterized in that** the magnetic field sensor (7) is connected to a microprocessor (9) which converts the electrical property of the magnetic field sensor (7) into an actuating signal for the lifting device.

11. Shaft head according to Claim 10,
**characterized in that** the microprocessor (9) is connected to an A/D converter, which outputs the actuating signal as a serial transfer protocol, proportionally or as an on/off signal.

12. Shaft head according to one of Claims 1 to 11,
**characterized in that** units comprising actuator and magnetic field sensor (7) are provided on both sides of the axis (5) of the actuating rocker (3).

## Revendications

1. Tête de timon (11) avec un arrangement d'interrupteurs (22, 23) pour actionner le système de levage d'un chariot élévateur, dans laquelle l'arrangement d'interrupteurs (22, 23) comprend un organe d'actionnement (3) installé sur la tête de timon (11), dans laquelle l'organe d'actionnement (3) présente un organe de commande, dans laquelle l'arrangement d'interrupteurs (22, 23) comprend un capteur (7), qui se trouve en liaison active sans contact avec l'organe de commande et dont la propriété électrique, comme l'inductance, la capacité ou la tension électrique, se modifie lors de l'actionnement de l'organe d'actionnement (3), dans laquelle le capteur (7) est un capteur de champ magnétique (7), l'organe de commande comprend au moins une source de champ magnétique et le capteur de champ magnétique (7) et la source de champ magnétique sont disposés de telle manière que le capteur de champ magnétique (7) soit traversé par les lignes de champ magnétique produites par la source de champ magnétique, dans laquelle des sources de champ magnétique sont disposées de part et d'autre du capteur de champ magnétique (7), **caractérisée en ce que** l'organe d'actionnement (3) comprend une bascule d'actionnement (3) montée de façon pivotante autour d'un axe (5) sur la tête de timon (11), laquelle comprend un évidement (10) s'étendant transversalement à la direction d'actionnement définie par l'axe (5) et dans lequel pénètre le capteur de champ magnétique (7).

2. Tête de timon selon la revendication 1, **caractérisée en ce que** le capteur de champ magnétique (7) se présente sous la forme d'une sonde de Hall (8).

3. Tête de timon selon la revendication 1 ou 2, **caractérisée en ce que** le capteur de champ magnétique (7) est entièrement entouré par le boîtier (1), qui présente à cet effet un renflement (6) pénétrant dans l'évidement (10).

4. Tête de timon selon l'une quelconque des revendications 1 à 3, **caractérisée en ce que** l'axe (5) s'étend dans la direction longitudinale de la tête de timon (11).

5. Tête de timon selon l'une quelconque des revendications 1 à 4, **caractérisée en ce qu'**il est prévu au moins un élément de ressort (4), par lequel la bascule d'actionnement (3) prend appui sur la tête de timon (11).

6. Tête de timon selon la revendication 5, **caractérisée en ce que** des éléments de ressort (4) sont disposés de part et d'autre de l'axe (5).

7. Tête de timon selon la revendication 6, **caractérisée en ce que** les éléments de ressort (4) se trouvent tous les deux à l'état détendu, lorsque la bascule d'actionnement (3) se trouve dans sa position de repos.

8. Tête de timon selon l'une quelconque des revendications 1 à 7, **caractérisée en ce que** des aimants permanents (2, 2') sont disposés de part et d'autre du capteur de champ magnétique (7).

9. Tête de timon selon la revendication 8, **caractérisée en ce que** les aimants permanents (2, 2') sont disposés de telle manière que des pôles de même nom soient tournés l'un vers l'autre.

10. Tête de timon selon l'une quelconque des revendications 1 à 9, **caractérisée en ce que** le capteur de champ magnétique (7) est relié à un microprocesseur (9), qui convertit la propriété électrique du capteur de champ magnétique (7) en un signal d'actionnement pour le système de levage.

11. Tête de timon selon la revendication 10, **caractérisée en ce que** le microprocesseur (9) est relié à un convertisseur analogique/numérique, qui émet le signal d'actionnement sous la forme d'un protocole de transmission en série proportionnel ou d'un signal marche/arrêt.

12. Tête de timon selon l'une quelconque des revendications 1 à 11, **caractérisée en ce qu'**il est prévu des unités composées de l'organe de commande et du capteur de champ magnétique (7) de part et d'autre de l'axe (5) de la bascule d'actionnement (3).
